Europäisches Patentamt

European Patent Office

Office européen des brevets

(19)

(11) Numéro de publication : **0 368 773 B1**

(12) **FASCICULE DE BREVET EUROPEEN**

(45) Date de publication du fascicule du brevet :
02.09.92 Bulletin 92/36

(51) Int. Cl.⁵ : **A01D 46/28**

(21) Numéro de dépôt : **89420432.0**

(22) Date de dépôt : **08.11.89**

(54) **Dispositif de secouage pour machine à récolter les baies.**

(30) Priorité : **10.11.88 FR 8815071**

(43) Date de publication de la demande :
**16.05.90 Bulletin 90/20**

(45) Mention de la délivrance du brevet :
**02.09.92 Bulletin 92/36**

(84) Etats contractants désignés :
**AT DE ES FR IT**

(56) Documents cités :
**EP-A- 0 266 259**
**FR-A- 2 522 246**
**FR-A- 2 581 287**
**US-A- 3 793 814**

(73) Titulaire : **Ligones, Hubert**
**Vaillen Saint Alexandre**
**F-30130 Pont Saint Esprit (FR)**

(72) Inventeur : **Ligones, Hubert**
**Vaillen Saint Alexandre**
**F-30130 Pont Saint Esprit (FR)**

(74) Mandataire : **Ropital-Bonvarlet, Claude**
**Cabinet BEAU DE LOMENIE, 51, avenue**
**Jean-Jaurès**
**F-69007 Lyon (FR)**

**Description**

La présente invention concerne le domaine de la récolte mécanique de baies à partir d'arbustes fruitiers et elle vise, plus spécialement, le domaine de la machine à vendanger comportant un dispositif de secouage selon le préambule de la revendication 1.

Une machine à récolter mécaniquement les baies se compose d'un châssis ou d'un bâti apte à enjamber une ligne de plants, le long de laquelle une telle machine est entraînée en progression continue, soit par ses propres moyens de motorisation, soit en étant attelée à un tracteur.

Une telle machine comporte une tête de récolte qui est constituée par deux supports s'étendant verticalement et liés à un mécanisme d'entraînement en rotations angulaires partielles alternées sur leurs axes. Les supports d'entraînement portent des entraîneurs, généralement de directions convergentes vers la partie postérieure de la machine en considération du sens de progression. De tels entraîneurs sont chargés de transmettre des vibrations transversales à la végétation portant les baies.

Des moyens de collecte des baies détachées sont, en outre, prévus sur la machine pour récolter de telles baies. De tels moyens comprennent des convoyeurs de reprise déplacés parallèlement à la direction de cheminement et des élévateurs chargés de transporter la récolte dans des bennes de stockage.

Les machines du type ci-dessus donnent, généralement, plus ou moins satisfaction, selon leur conception. Les machines les plus performantes sont celles faisant intervenir des entraîneurs constitués par des bras déformables élastiquement selon une direction transversale au plan de symétrie longitudinal et vertical de la machine, voir FR-A-2 436 553.

L'expérience de mise en oeuvre de telles machines incite les utilisateurs à considérer qu'il serait avantageux de pouvoir les faire cheminer plus rapidement, afin d'assurer une récolte mécanique dans un temps le plus faible possible. Cet avantage est particulièrement important pour ce qui concerne les machines à vendanger, car il permet, notamment, de réaliser la récolte dans les meilleures conditions climatiques possibles desquelles dépendent la qualité des baies détachées et la qualité du vin produit.

On a constaté que l'accélération de la vitesse de progression de la machine n'était pas un facteur essentiel pour réaliser effectivement une récolte mécanique plus rapide. Il faut, en effet, tenir compte du nombre de courses alternatives susceptibles d'être conférées aux entraîneurs de la tête de récolte pour obtenir un détachement convenable des baies sans meurtrir, blesser ou détériorer les arbustes.

Un autre facteur à prendre en considération est aussi celui de prélèvement de la récolte par les convoyeurs et les élévateurs, afin d'éviter un engorgement de la machine.

Pour ce qui concerne ce second facteur, des propositions ont été faites pour améliorer la capacité de prélèvement. Une des solutions préconisées consiste à supprimer les convoyeurs à godets et à les remplacer par des bacs ou augets montés sur des transporteurs sans fin, présentant une longueur sensiblement égale à celle de la machine et entraînés en déplacement parallèlement au plan de symétrie antéropostérieur de la machine. Par cette méthode, les bacs prélèvent à la volée les baies détachées sur toute la longueur utile de la tête de récolte et ramassent, en partie basse, sur toute la longueur utile du plan de récolte, les baies qui n'ont pas été prélevées à la volée. Une telle proposition est, notamment, illustrée par le brevet **GB-A-2 013 465**.

De tels moyens permettent d'accroître la capacité de prélèvement et devraient autoriser un avancement plus rapide d'une telle machine, dans la mesure où la tête de récolte serait capable de transmettre les vibrations transversales nécessaires sans risque de détérioration, de bris ou de meurtrissures.

Les expériences qui ont été tentées ont permis de constater qu'il n'était pas possible de modifier, de façon significative, la fréquence d'oscillation transversale des entraîneurs, c'est-à-dire le nombre de sollicitations à l'unité de temps qu'ils sont à même de transmettre à la végétation pour la secouer et provoquer le détachement des baies.

En réalité donc, un accroissement ou une accélération de la vitesse de progression de la machine ne peut être envisagée que par l'adoption d'une nouvelle tête de récolte.

C'est justement l'objet de l'invention de proposer un nouveau dispositif de secouage pour machine du type ci-dessus, dispositif conçu de manière à posséder une efficacité de secouage nettement améliorée par rapport aux dispositifs actuellement connus, afin de rendre possible une augmentation de la vitesse de progression de la machine.

Un autre objet de l'invention est de proposer un dispositif de secouage aisément adaptable sur toutes les machines à vendanger comportant une tête de secouage agissant sur la végétation en ligne par application de vibrations transversales.

Un autre objet de l'invention est de proposer un dispositif de secouage se caractérisant par l'existence d'outils de secouage, de faible masse, peu coûteux et facilement interchangeables en cas d'usure ou de détérioration.

Pour atteindre les objectifs ci-dessus, le dispositif de secouage selon l'invention est caractérisé en ce que chaque entraîneur est constitué par un outil longiligne, porté, pour s'étendre sensiblement parallèlement au plan de symétrie vertical longitudinal de la tête, par un système articulé, de type parallélogramme déformable, comportant au moins deux bras flexibles adaptés sur au moins deux supports dont l'un au moins est moteur et dont l'un est le support d'entraînement.

Diverses autres caractéristiques ressortent de la description faite ci-dessous en référence aux dessins annexés qui montrent, à titre d'exemples non limitatifs, des formes de réalisation de l'objet de l'invention.

La **fig. 1** est une vue en plan schématique illustrant le domaine technique de l'invention.

La **fig. 2** est une perspective schématique partielle de l'objet de l'invention.

La **fig. 3** est une vue en plan d'une forme de réalisation de l'objet de l'invention.

La **fig. 4** est une vue en plan partielle d'un détail de réalisation.

La **fig. 5** est une vue en plan, analogue à la **fig. 1** et montrant une caractéristique de fonctionnement.

La **fig. 6** est une vue en plan illustrant une variante de réalisation.

La **fig. 7** est une vue en plan d'une variante de réalisation de l'un des moyens de l'invention.

La **fig. 8** est une vue en plan partielle d'un détail de réalisation.

La **fig. 9** est une coupe transversale prise, à plus grande échelle, selon la ligne **IX-IX** de la **fig. 8**.

La **fig. 10** est une vue en plan partielle d'une variante de montage par rapport à la **fig. 8**.

La **fig. 11** est une coupe transversale prise, à plus grande échelle, selon la ligne **XI-XI** de la **fig. 10**.

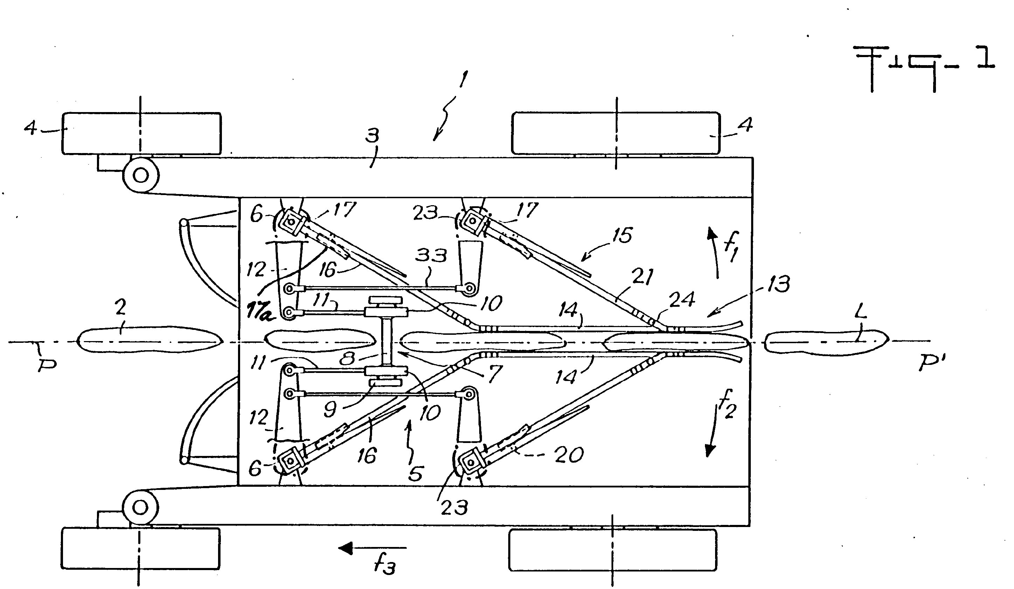

La **fig. 1** montre une machine **1**, du type à vendanger des plants de vigne **2** disposés en ligne **L**. Il doit être considéré qu'une machine, telle que **1**, peut être conçue et réalisée de façon analogue pour assurer la récolte mécanique de baies autres que des raisins, portées par des arbustes également plantés en lignes. Tel est le cas des groseillers, des cassissiers.

Une machine, telle que **1**, du type tracté ou automotrice, possède un châssis **3** porté par des roues **4** autorisant un déplacement de la machine parallèlement à une ligne **L** de plants qu'elle chevauche ou enjambe. Le châssis **3** porte une tête **5** de récolte, généralement constituée par des supports d'entraînement **6** s'étendant sensiblement verticalement en étant reliés à un mécanisme **7** d'entraînement en rotations partielles alternatives sur leurs axes. Un tel mécanisme est, par exemple, constitué par un arbre **8** mû en rotation par tout moteur et porté par des paliers **9**. L'arbre **8** est associé à un ou deux excentriques opposés **10** commandant deux bielles **11** attelées à des manivelles **12** solidaires des supports **6**. Généralement, les supports **6** sont au nombre de deux, s'étendent de part et d'autre du plan de symétrie vertical longitudinal **P-P'** de la tête **5** et portent au moins une et, de préférence, plusieurs séries d'entraîneurs **13** qui sont disposés dans chaque paire en vis-à-vis dans le même plan horizontal ou non, de part et d'autre du plan P-P', pour être déplacés, simultanément, dans le sens des flèches **f₁** et **f₂**, alternativement, c'est-à-dire perpendiculairement au plan **P-P'**, de manière à soumettre la végétation ou les arbustes **2** à des vibrations transversales générant la chute des baies qu'ils portent.

Selon l'invention, chaque entraîneur **13** est constitué par un outil longiligne **14** déformable élastiquement, constitué sous la forme d'un bâton flexible réalisé, par exemple, en une matière plastique appropriée, composite ou non, telle qu'en polyamide, en fibre de verre, en carbone.

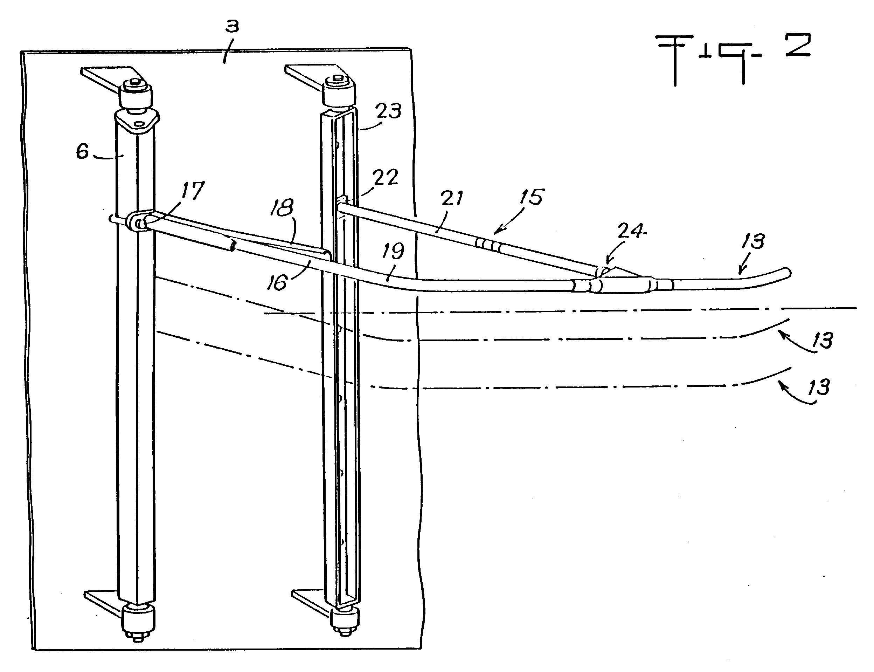

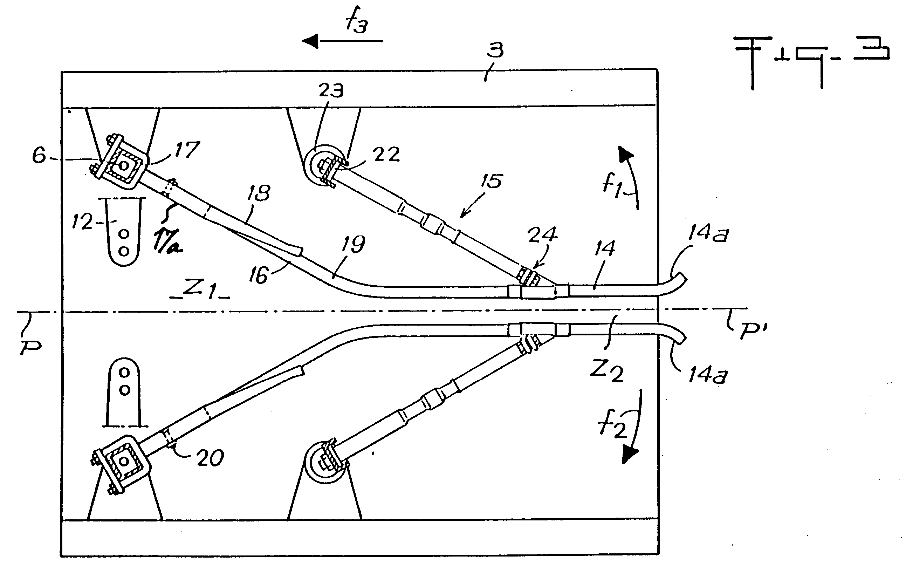

L'outil **14** est prévu pour s'étendre sensiblement parallèlement au plan **P-P'** et, à cette fin, se trouve porté par un système articulé **15** de type parallélogramme déformable. Dans une forme de réalisation simplifiée, telle qu'illustrée par les **fig. 2** et **3**, le système articulé **15** comprend un premier bras **16**, dit antérieur par rapport au sens de progression ou d'avancement de la machine, tel que figuré par la flèche **f₃**. Le bras antérieur **16** est ancré, par sa partie terminale antérieure par un encastrement **17**, sur le support correspondant **6**. L'encastrement **17** est de type connu et comporte, par exemple, un renfort extérieur **18** situé pour s'étendre à l'opposé du plan **P-P'** par rapport au bras **16** en présentant une plus grande longueur que la partie intérieure **17a** de l'encastrement. Le renfort **18** peut, par exemple, être constitué par une pièce présentant une divergence par rapport au bras. Un tel renfort doit être considéré comme faisant partie de la technique antérieure connue et, à cette fin, il peut être fait référence au brevet **FR-A-2 436 553**. Une variante de réalisation assumant la même fonction consiste à réaliser l'encastrement **17** au moyen d'un tube dont la partie terminale est coupée en sifflet ou en biseau comme illustré par la **fig. 3**, de manière à posséder une longueur extérieure par rapport au plan **PP'** supérieure à celle intérieure pour constituer le renfort **18**.

La liaison, entre la bras **16** et le tube dans lequel la partie terminale antérieure du bras **16** est engagée par encastrement est assurée, par tout moyen approprié, notamment par une goupille, un boulon ou une clavette ou une vis de pression **20** autorisant un réglage de la longueur d'un côté du parallélogramme permettant d'obtenir un bon parallélisme des outils au moment du montage sur la tête de récolte.

Le bras **16** est, de préférence, constitué par un élément flexible en une même matière que le bâton **14** auquel il est relié par un moyen de liaison déformable **19**. Dans la forme de réalisation, illustrée à la **fig. 3**, le moyen **19** est constitué par une zone précambrée reliant le bras **16** au bâton **14** qui en constitue le prolongement intégral. Dans un tel cas, le bras **16** et le bâton **14** sont constitués à partir d'un seul élément longiligne qui est cambré dans la zone **19**.

Le système articulé **15** comprend, par ailleurs, un second bras **21**, de même longueur que le bras **16** et réalisé, comme ce dernier, en une même matière capable de lui conférer une faculté de flexibilité et de déformation élastique. Le bras **21**, dit postérieur, est adapté par un encastrement **22** sur un support **23** monté sur le châssis de la machine, de manière à pouvoir tourner sur son axe longitudinal, à la manière du support **6**. Le bras postérieur **21** est lié, par sa partie terminale libre, à l'outil **14** par un moyen de liaison **24**, par exemple constitué par une articulation élastique située, dans tous les cas, en arrière de la partie terminale de l'outil **14** qui reste libre.

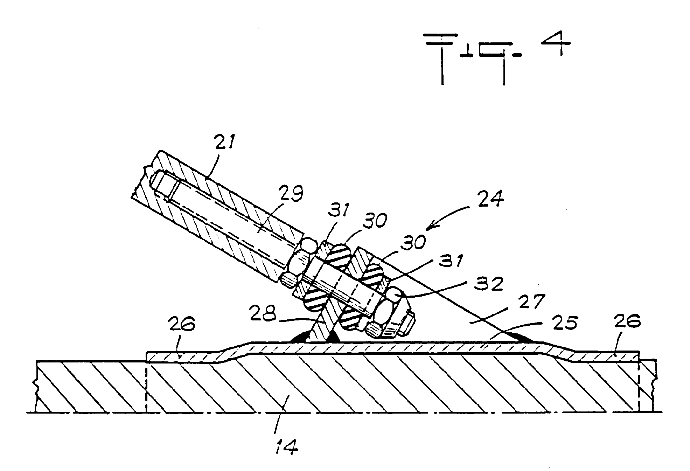

La **fig. 4** montre, à plus grande échelle, que la liaison élastique **24** est, par exemple, formée par un manchon **25** adapté sur le bâton **14** de toute façon appropriée, notamment par deux parties terminales **26** serties. Le manchon **25** porte, à sa périphérique, un gousset **27** renforçant une plaque **28** qui est traversée par une tige filetée **29** prolongeant la partie terminale extrême du bras **21**. La liaison, entre la tige filetée **29** et la plaque **28**, est assurée par interposition de deux garnitures **30** déformables élastiquement, constituant des amortisseurs précontraints entre des rondelles de butée **31** dont l'une au moins est à position réglable, notamment par l'intermédiaire d'un écrou ou analogue **32**.

Dans le cas de réalisation selon la **fig. 2**, le moyen de liaison déformable **24** est disposé pour être situé sensiblement au centre de gravité de l'outil **14**.

La **fig. 3** montre que le dispositif de secouage selon l'invention est constitué de manière que les entraîneurs possèdent des bras **16** inclinés de façon convergente vers le plan **P-P'** et en direction de la partie postérieure de la machine. Les bras **16** délimitent ainsi entre eux une zone $Z_1$ analogue à un couloir d'engagement, aboutissant à une zone de secouage $Z_2$ délimitée sous la forme d'un couloir à bords sensiblement parallèles par les outils **14**.

Ainsi que cela ressort de la comparaison des **fig. 2** et **3**, le dispositif de secouage selon l'invention se caractérise par la possibilité de mettre en oeuvre des outils de secouage **14** de grande longueur qui sont maintenus par les bras postérieurs **21**, de manière à éviter tout effet de fouet préjudiciable à la végétation lors du secouage ou du battement simultané dans le sens des flèches $f_1$ et $f_2$.

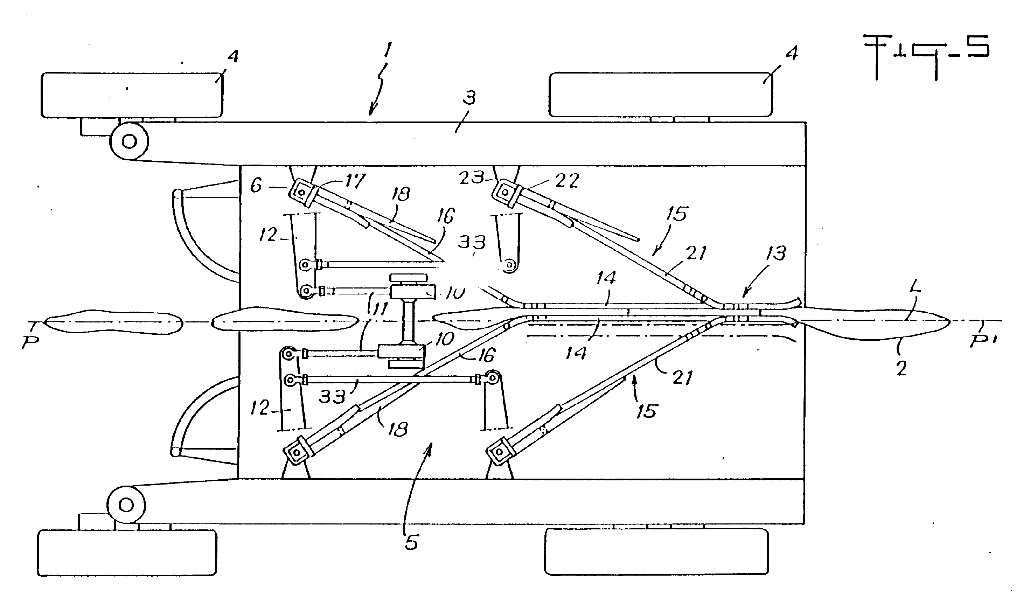

Les systèmes articulés **15** offrent la particularité avantageuse de maintenir les outils **14** sensiblement parallèles entre eux et de part et d'autre du plan **P-P'** au cours de leurs déplacements relatifs simultanés, comme cela apparaît à la **fig. 5**. En raison de la grande longueur utile des outils **14**, il devient ainsi possible d'accroître notablement le nombre de vibrations transversales transmises à l'unité de distance à la végétation **2** et, par conséquent, d'améliorer l'efficacité de secouage et de faire progresser plus rapidement la machine dans le sens de la flèche $f_1$.

Il convient de noter que la mise en oeuvre de bâtons **14** flexibles confère à l'outil une certaine adaptation aux variations de densité ou d'épaisseur de la ligne de plan $\underline{L}$. Une telle adaptation est, également, rendue possible par le caractère flexible des bras **16** et **21** qui sont, notamment, chargés de transmettre les oscillations aux parties terminales des outils **14**, sans qu'il en résulte d'effet de fouet de la partie terminale de ces derniers.

La **fig. 3** montre que les extrémités **14a** des outils **14** peuvent être infléchies dans le plan horizontal, de façon divergente, de manière à éviter tout contact ponctuel, brutal ou contendant, susceptible d'intervenir au cours des oscillations transversales appliquées à la végétation.

La **fig. 1** montre que, dans une forme de réalisation préférée, il peut être possible, à partir de la disposition selon la **fig. 3**, de réaliser chaque entraîneur de manière que le système articulé **15** comporte un bras antérieur **16** moteur et actif, et un bras postérieur **21** également actif. Dans un tel cas, les supports **6** et **23** sont alors reliés par une bielle d'accouplement **33**.

La **fig. 1** montre, également, que, dans un tel cas, les bras **21** peuvent être encastrés sur les supports **23** par des moyens d'encastrement **17**, du même type que ceux décrits précédemment en relation avec les bras antérieurs **16**.

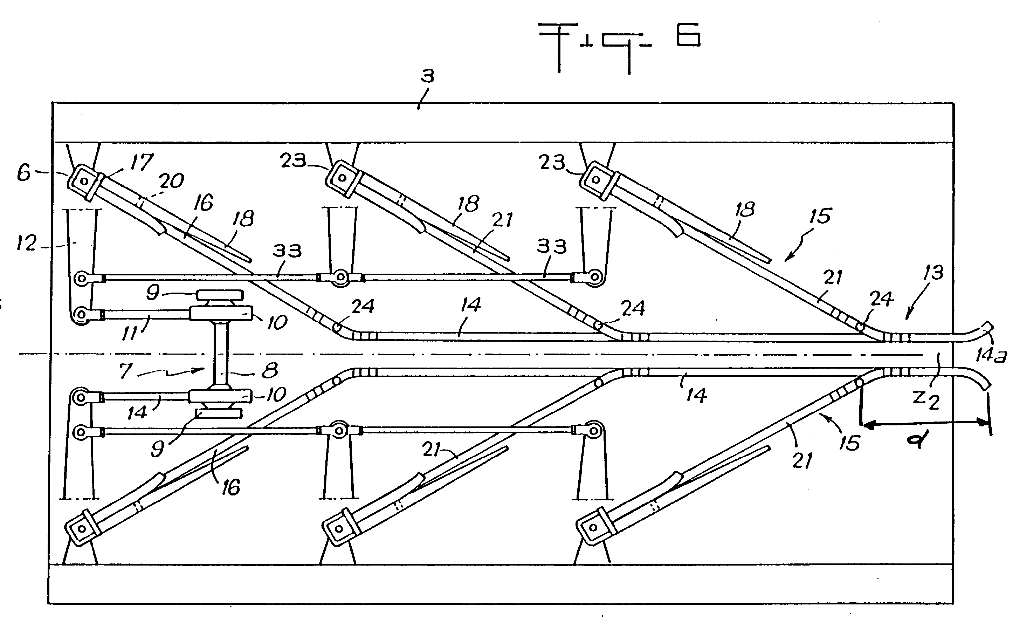

La **fig. 6** montre une autre forme d'exécution selon laquelle chaque entraîneur comprend un système articulé **15** se composant d'un bras antérieur **16** et de plusieurs bras postérieurs **21** qui sont, de préférence, tous rendus moteurs par l'intermédiaire de bielles d'accouplement **33**. Dans un tel cas, chaque entraîneur comprend un outil **14** constitué par un bâton de structure indépendante, qui est relié aux extrémités libres des bras **16** et **21** par l'intermédiaire de moyens de liaison **24**.

Dans tous les exemples de réalisation, il est prévu de disposer la liaison **24** du bras antérieur **16** à l'extrémité antérieure du bâton **14** et la liaison **24** du dernier bras postérieur à une distance $\underline{d}$ de l'extrémité arrière dudit bras, sensiblement égale à la moitié de la mesure d'écartement entre deux liaisons **24**. De cette manière, le bâton **14** est convenablement maintenu, tout en offrant une possibilité de déformation élastique relative, de manière à posséder une efficacité de secouage sur toute sa longueur, sans que sa partie terminale ne soit soumise à un effet de fouet.

La **fig. 6** illustre une possibilité qui n'est donnée qu'à titre limitatif. Il doit être entendu que, selon le type de machine, notamment à vendanger, il est possible de réaliser un entraîneur dont le système articulé **15**, de type parallélogramme déformable, est composé de plus de trois bras **16** et **21**.

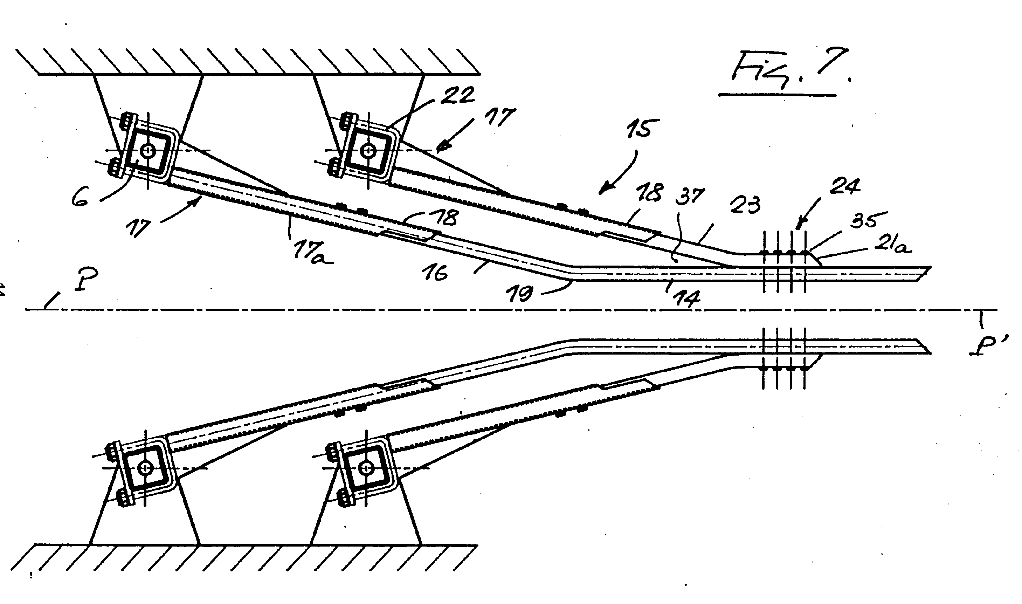

La **fig. 7** montre une variante de réalisation selon laquelle la liaison 24 entre un outil **14** et un bras postérieur **21** est assurée en conformant la partie terminale **21a** dudit bras, de manière qu'il soit amené à jouxter l'outil **14** sur lequel il est assujetti par des boulons traversants **35** noyés dans la partie du bras faisant face au plan **P-P'**.

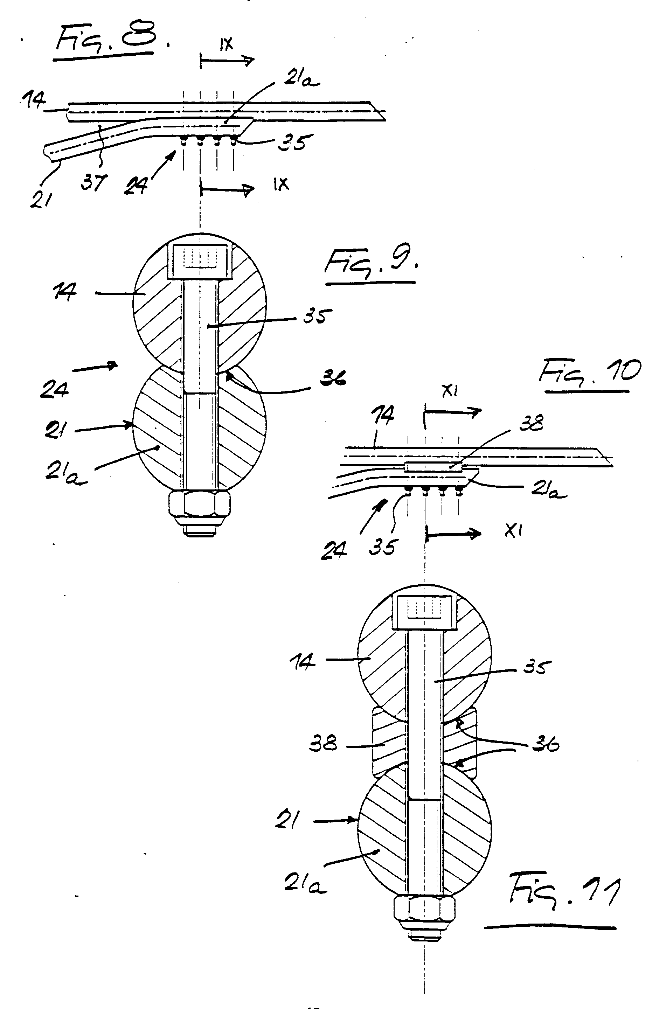

La liaison peut faire intervenir un simple contact de surface comme illustré par la **fig. 7** ou, de préférence, un emboîtement relatif, comme cela ressort des **fig. 8** et **9**. Selon cette variante, la partie terminale **21a** est usinée pour comporter une empreinte négative **36** de section transversale concave selon un rayon égal à celui présenté localement par l'outil **14**. Cette disposition permet un enveloppement relatif de l'outil **14** et limite la possibilité d'engagement et de coincement de végétaux dans l'angle rentrant **37** délimité par l'outil **14** et le bras **21** en amont de la liaison **24**.

Les **fig. 10** et **11** montrent une réalisation différente de la liaison **24**, en vue d'obtenir le même résultat. Selon cette réalisation, l'outil **14** et la partie terminale **21a** sont assemblés avec interposition d'une entretoise **38** également traversée par les boulons et présentant sur deux de ses faces opposées deux empreintes **36** pour l'emboîtement partiel de l'outil **14** et de la partie terminale **21a**.

L'invention n'est pas limitée aux exemples décrits et représentés, car diverses modifications peuvent y être apportées sans sortir du cadre défini par les revendications.

## Revendications

**1** - Dispositif de secouage pour machine à récolter les baies, du type comprenant au moins une série d'entraîneurs **(13)** déformable élastiquement à partie terminale postérieure libre situés sensiblement horizontalement, de part et d'autre d'un plan médian vertical et longitudinal **(P-P')** d'une tête de récolte **(5)** portée par une machine **(1)** et montés sur deux supports d'entraînement **(6)** sensiblement verticaux liés à un mécanisme **(7)** d'entraînement simultané en rotations angulaires partielles sur leurs axes, alternées, de manière à générer, par les entraîneurs, des vibrations transversales transmises à la végétation **(2)** portant les baies,
caractérisé en ce que chaque entraîneur **(13)** est constitué par un outil longiligne **(14)** porté, pour s'étendre sensiblement parallèlement au plan **(P-P')**, par un système articulé **(15)**, de type parallélogramme déformable, comportant au moins deux bras flexibles **(16, 21)** adaptés sur au moins deux supports **(6, 23)** dont l'un au moins est moteur et dont l'un est le support d'entraînement **(6)**.

**2** - Dispositif de secouage selon la revendication 1, caractérisé en ce que le système articulé **(15)** se compose de plusieurs bras adaptés sur autant de supports qui sont liés entre eux par des bielles d'accouplement **(33)**.

**3** - Dispositif de secouage selon la revendication 1 ou 2, caractérisé en ce que le système articulé **(15)** comprend au moins deux bras montés rigidement par une extrémité en encastrement sur un support et liés par l'autre extrémité à l'outil longiligne par un moyen de liaison **(24)**.

**4** - Dispositif de secouage selon la revendication 3, caractérisé en ce que le moyen de liaison **(24)** est constitué, pour le bras antérieur par rapport au sens d'avancement, par une zone **(19)** précambrée, déformable élastiquement, reliant ledit bras à l'outil qui en constitue le prolongement et, pour le ou les bras suivants **(21)**, par une liaison élastique **(24)** dont celle correspondant au dernier bras postérieur est située à distance de la partie terminale libre de l'outil.

**5** - Dispositif de secouage selon la revendication 3, caractérisé en ce que le système articulé **(15)** est constitué par au moins deux bras liés, par des moyens de liaison déformable constitués par des articulations élastiques, à un outil longiligne formé par un bâton flexible.

**6** - Dispositif de secouage selon la revendication 4 ou 5, caractérisé en ce que chaque liaison **(24)** comporte des moyens d'amortissement élastique **(30)**.

**7** - Dispositif de secouage selon la revendication 1, 2, 3 ou 5, caractérisé en ce qu'il comprend, pour chaque paire d'entraîneurs, deux systèmes articulés dont les bras antérieurs par rapport au sens d'avancement sont convergents en direction du plan **(P-P')** et vers la partie postérieure de la tête pour délimiter un couloir ou une zone **(Z$_1$)** d'engagement relatif et de centrage de la végétation, ledit couloir aboutissant à une zone **(Z$_2$)** de secouage de largeur sensiblement constante délimitée par les outils **(14)**.

**8** - Dispositif de secouage selon la revendication 4, caractérisé en ce que la liaison **(24)** du dernier bras postérieur **(21)** est située à une distance (**d**) de l'extrémité arrière de l'outil **(14)** sensiblement égale à la moitié de l'écartement entre deux liaisons **(19, 24)** entre l'outil et deux bras **(16, 21)** successifs.

**9** - Dispositif de secouage selon l'une des revendications 1 à 8, caractérisé en ce que le système articulé comprend un bras antérieur et un bras postérieur dont l'extrémité libre est liée à l'outil par un moyen de liaison déformable situé sensiblement au centre de gravité de l'outil.

**10** - Dispositif de secouage selon l'une des revendications 3, 4, 6, 8, caractérisé en ce que la liaison **(24)** est formée par liaison par boulons traversants noyés **(35)** entre l'outil **(14)** et la partie terminale **(21a)** du bras **(21)**.

**11** - Dispositif de secouage selon la revendication 10, caractérisé en ce que la partie terminale **(21a)** présente une empreinte **(36)** d'emboîtement partiel de l'outil.

12 - Dispositif de secouage selon la revendication 10, caractérisé en ce que la liaison (**24**) fait intervenir entre les outils (**14**) et la partie terminale (**21a**) une entretoise (**38**) présentant, sur deux faces opposées, deux empreintes (**36**) d'emboîtement partiel de l'outil et de la partie terminale (**21a**).

**Patentansprüche**

1. Rüttelvorrichtung für Erntemaschine für Beeren von der Art mit wenigstens einer Reihe von elastiche verformbaren Mitnehmern (13) mit einem freien hinteren Endbereich, und die im wesentlich horizontal angeordnet sind beiderseits einer vertikalen und längslaufenden Mittenebene (P-P'), eines Erntekopfes (5), der durch eine Maschine (1) getragen wird und die auf zwei Antriebsstützen (6) montiert sind, die im wesentlichen vertikal mit einem Antriebsmechanismus (7) verbunden sind, wobei sie in Teilwinkeldrehungen auf ihren Achsen gleichgeschaltet sind, abwechselnd derart, daß durch die Mitnehmer Quervibrationen erzeugt werden, die auf die die Beeren tragende Pflanze (2) übertragen werden,
   *dadurch gekennzeichnet, daß jeder Mitnehmer (13) durch ein längliches Werkzeug (14) gebildet wird, das, um sich im wesentlichen parallel zur Ebene (P-P') zu erstrecken, durch ein Gelenksystem (15) vom Typ eines verformbaren Parallelogramms getragen wird, das wenigstens zwei biegsame Arme (16, 21) aufweist, die auf wenigstens zwei Trägern (6, 23), von denen wenigstens einer antreibend ist, angeordnet sind, und von denen einer die Antriebsstütze (6) ist.*

2. Rüttelvorrichtung nach Anspruch 1, **dadurch gekennzeichnet,** daß das Gelenksystem (15) aus mehreren Armen besteht, die auf ebenso vielen Stützen angebracht sind, die untereinander durch Kupplungsstangen (33) verbunden sind.

3. Rüttelvorrichtung nach Anspruch 1 oder 2, **dadurch gekennzeichnet,** daß das Gelenksystem (15) wenigstens zwei Arme aufweist, die starr an einem Ende unter Einklemmen auf eine Stütze montiert sind und über das andere Ende mit dem Längswerkzeug durch eine Verbindungseinrichtung (24) verbunden sind.

4. Rüttelvorrichtung nach Anspuch 3, **dadurch gekennzeichnet,** daß die Verbindungseinrichtung (24) für den vorderen Arm bezüglich der Vorschubrichtung, durch eine vorgewölbte Zone (19) gebildet wird, die elastisch verformbaren ist, welche den Arm mit dem Werkzeug, der davon die Verlägerung bildet, verbindet, und für den oder die nachfolgenden Arme (21) durch eine elastische Verbindung (24) gebildet wird, von denen jene, die dem letzten hinteren Arm entspricht, im bestand des freien Endes des Werkzeugs angeordnet ist.

5. Rüttelvorrichtung nach Anspruch 3, **dadurch gekennzeichnet,** daß das Gelenksystem (15) gebildet wird durch wenigstens zwei Arme, die durch verformbare Verbindungseinrichtungen, die durch elastische Gelenke gebildet werden, mit einem Längswerkzeug verbunden sind, das aus einem biegsamen Stab gebildet wird.

6. Rüttelvorrichtung nach Anspruch 4 oder 5, **durch gekennzeichnet,** daß jede Verbindung (24) elastische Dämpfereinrichtungen (30) aufweist.

7. Rüttelvorrichtung nach Anspruch 1, 2, 3 oder 5, **dadurch gekennzeichnet,** daß sie für jedes Paar von Mitnehmern zwei Gelenksysteme aufweist, deren vordere Arme bezüglich der Vorschubrichtung in Richtung der Ebene (P-P') und in Richtung des hinteren Bereichs des Kopfes konvergieren, um einen Durchgang oder eine Zone ($Z_1$) des relativen Eingriffs und der Zentrierung der Pflanze zu begrenzen, wobei der Durchgang bei einer Rüttelzone ($Z_2$) endet, die eine im wesentlichen konstante, von den Werkzeugen (14) begrenzte Breite aufweist.

8. Rüttelvorrichtung nach Anspruch 4, **dadurch gekennzeichnet,** daß die Verbindung (24) des letzten hinteren Armes (21) in einem bestand (d) des hinteren Endes des Werkzeuges (14) angeordnet ist, der im wesentlichen gleich dem halben Abstand zwischen zwei Verbindungen (19, 24) zwischen dem Werkzeug und zwei aufeinanderfolgenden Armen (16, 21) ist.

9. Rüttelvorrichtung nach einem der Ansprüche 1 bis 8, **dadurch gekennzeichnet,** daß das Gelenksystem einen vorderen Arm und einen hinteren Arm aufweist, dessen freies Ende mit dem Werkzeug durch eine verformbare Verbindungseinrichtung verbunden ist, die im wesentlichen im Schwerpunkt des Werkzeugs angeordnet ist.

10. Rüttelvorrichtung nach einem der Ansprüche 3, 4, 6, 8, **dadurch gekennzeichnet,** daß die Verbindung (24) gebildet wird durch eingetauchte Querverbindungszapfen (35) zwischen dem Werkzeug (14) und dem Endbereich (21a) des Armes (21).

11. Rüttelvorrichtung nach Anspruch 10, **dadurch gekennzeichnet,** daß der Endbereich (21a) einen Eindruck (36) des teilweisen Eingriffs des Werkzeugs aufweist.

**12.** Rüttelvorrichtung nach Anspruch 10, **dadurch gekennzeichnet,** daß die Verbindung (24) zwischen den Werkzeugen (14) und dem Endebereich (21a) eine Abstandshülse (38) einbringt, die an zwei entgegengesetzten Seiten zwei Eindrükke (36) des teilweisen Ineingriffstehens des Werkzeugs mit dem Endbereich (21a) aufweist.

## Claims

1 - Vibrating device for berry harvester of the type comprising at least one series of elastically deformable drivers (13) having a free rear end portion, with said drivers being situated substantially horizontally on both sides of a vertical and longitudinal median plane (P-P') of a harvest head (5) carried by a machine (1), and being mounted on two substantially vertical driving supports (6) connected to a simultaneous driving mechanism (7) in partial angular rotations on their axes, such rotations being alternated so as to generate, through the drivers, transversal vibrations transmitted to the vegetation (2) carrying the berries,
   characterized in that each driver (13) is constituted by an elongated tool (14) carried, so as to extend substantially parallel to the plane (P-P'), by an articulated system (15) of the deformable parallelogram type, and comprising at least two flexible arms (16, 21) which are adapted on at least two supports (6, 23) one of which at least is motive and one of which is the driving support (6).

2 - Vibrating device according to claim 1, characterized in that the articulated system (15) consists of a plurality of arms which are adapted on as many supports which are interconnected by connecting rods (33).

3 - Vibrating device according to claim 1 or 2, characterized in that the articulated system (15) comprises at least two arms which are rigidly mounted by one end in embedded fashion on a support and which are connected by the other end to the elongated tool via a connection means (24).

4 - Vibrating device according to claim 3, characterized in that the connection means (24) is constituted, for the front arm with respect to the forward direction, by a prearched zone (19) which is elastically deformable, and which connects said arm to the tool which is the extension thereof and, for the next arm or arms (21), by an elastic connection (24) of which that corresponding to the last rear arm is situated at a distance from the free end portion of the tool.

5 - Vibrating device according to claim 3, characterized in that the articulated system (15) is constituted by at least two arms which are connected via deformable connection means constituted by elastic articulations, to an elongated tool formed by a flexible rod.

6 - Vibrating device according to claim 4 or 5, characterized in that each connection (24) comprises elastic damping means (30).

7 - Vibrating device according to claim 1, 2, 3 or 5, characterized in that it comprises, for each pair of drivers, two articulated systems of which the front arms with respect to the forward direction are convergent in the direction of the plane (P-P') and towards the rear portion of the head so as to define a passage or zone ($Z_1$) for relatively engaging and centering the vegetation, said passage ending in a vibrating zone ($Z_2$) of a substantially constant width delimited by the tools (14).

8 - Vibrating device according to claim 4, characterized in that the connection (24) of the last rear arm (21) is situated at a distance ($d$) from the rear end of the tool (14) which is substantially equal to half the gap between two connections (19, 24) between the tool and two successive arms (16, 21).

9 - Vibrating device according to one of claims 1 to 8, characterized in that the articulated system comprises a front arm and a rear arm of which the free end is connected to the tool via a deformable connection means situated substantially in the center of gravity of the tool.

10 - Vibrating device according to one of claims 3, 4, 6, 8, characterized in that the connection (24) is achieved by through bolts imbedded (35) between the tool (14) and the end portion (21a) of the arm (21).

11 - Vibrating device according to claim 10, characterized in that the end portion (21a) presents a recess (36) for partially fitting in the tool.

12 - Vibrating device according to claim 10, characterized in that the connection (24) requires between the tool (14) and the end portion (21a) a cross-member (38) having, on two opposite faces, two recesses (36) for partially fitting in the tool and the end portion (21a).

Fig-1

Fig. 2

Fig. 3

Fig. 4

Fig-5

EP 0 368 773 B1

Fig. 6

Fig. 7.

EP 0 368 773 B1

Fig. 8.

Fig. 9.

Fig. 10

Fig. 11